(19) Europäisches Patentamt
European Patent Office
Office européen des brevets

(11) **EP 2 975 167 B1**

(12) **EUROPEAN PATENT SPECIFICATION**

(45) Date of publication and mention
of the grant of the patent:
**08.08.2018 Bulletin 2018/32**

(21) Application number: **14763864.7**

(22) Date of filing: **14.03.2014**

(51) Int Cl.:
*D04H 3/007* (2012.01)          *A61F 13/15* (2006.01)
*C08L 23/04* (2006.01)          *C08L 23/10* (2006.01)
*D01F 8/06* (2006.01)           *D04H 3/147* (2012.01)

(86) International application number:
**PCT/JP2014/056979**

(87) International publication number:
**WO 2014/142323 (18.09.2014 Gazette 2014/38)**

(54) **NONWOVEN FABRIC AND FIBER PRODUCT**

VLIESSTOFF UND FASERPRODUKT

TISSU NON TISSÉ ET PRODUIT FIBREUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2013 JP 2013054291**

(43) Date of publication of application:
**20.01.2016 Bulletin 2016/03**

(73) Proprietor: **Idemitsu Kosan Co., Ltd
Tokyo 100-8321 (JP)**

(72) Inventors:
• **KOORI, Yohei**
  **Ichihara-shi**
  **Chiba 299-0193 (JP)**
• **TAKEBE, Tomoaki**
  **Ichihara-shi**
  **Chiba 299-0193 (JP)**
• **MINAMI, Yutaka**
  **Ichihara-shi**
  **Chiba 299-0193 (JP)**

(74) Representative: **Vossius & Partner
Patentanwälte Rechtsanwälte mbB
Siebertstrasse 3
81675 München (DE)**

(56) References cited:
**EP-A- 2 314 741          EP-A1- 2 479 331
WO-A1-2011/108504          JP-A- H11 107 153
JP-A- H11 140 766          JP-A- H11 241 224
JP-A- 2009 209 506          JP-A- 2012 237 081
JP-A- 2013 032 607**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a spunbonded nonwoven fabric composed of a core-sheath composite fiber.

Background Art

In recent years, polyolefin-based fibers and nonwoven fabrics are used for various applications, such as a disposable diaper, a sanitary product, a hygienic product, a clothing material, a bandage, a packaging material, etc. The fibers and nonwoven fabrics are often used for applications in which they come into direct contact with the body, and thus, in recent years, a required performance regarding good wear feeling to the body and hand touch feeling are being more increased. For this reason, with respect to the nonwoven fabrics, technological development related to an improvement of texture for good wear feeling, reduction in basis weight for weight reduction of products, and the like is demanded. In order to improve these performances, optimization of a structure or composition of fibers constituting the nonwoven fabric, improvement of spinnability, and improvement of flexibility and high strengthening of the nonwoven fabric are demanded.

In a nonwoven fabric to be used for members coming into direct contact with the body, for the purpose of improving its wear feeling, an improvement in smoothness or softness of the surface is demanded. At present, examples of means for solving this problem include a method in which a fiber constituting a nonwoven fabric is constructed of a core-sheath type composite fiber structure composed of a core component and a sheath component, and polypropylene is used for the core component, whereas polyethylene (e.g., HDPE, LLDPE, etc.) is used for the sheath component. By using polyethylene for the sheath component, as compared with fibers composed of only polypropylene, the fiber surface becomes smooth, and it becomes possible to produce a nonwoven fabric having a very pleasant texture.

But, the use of polyethylene for the sheath component encounters a problem that end breakage occurs frequently on the spinning line in nonwoven fabric molding, so that spinnability and moldability are not stable. In addition, the fibers become rigid, and therefore, an improvement of flexibility of the nonwoven fabric is demanded, too.

PTL 1 discloses an elastic nonwoven fabric composed of a sheath-core type composite fiber in which a composition composed of a low-crystalline polypropylene and a high-crystalline polypropylene is used for a sheath component, and a low-crystalline polypropylene is used for a core component. However, in the fiber disclosed in the above-cited PTL 1, a weight ratio of the low-crystalline polypropylene is large, so that end breakage is easy to occur. Thus, the spinnability and moldability are required to be improved.

PTL 2 discloses a specific elastic nonwoven cloth and a fiber product using the elastic nonwoven cloth.

PTL 3 relates to a specific method of producing a polypropylene elastic fiber and a polypropylene-based elastic fiber.

Citation List

Patent Literature

PTL 1: JP-A-2009-209506
PTL 2: EP 2 543 759 A1
PTL 3: EP 2 314 741 A1

Summary of Invention

Technical Problem

In view of the foregoing circumstances, the present invention has been made, and its object is to provide a spunbonded nonwoven fabric composed of a core-sheath composite fiber, which exhibits improved spinning stability of the fiber and flexibility of the nonwoven fabric.

Solution to Problem

The present inventors made extensive and intensive investigations. As a result, it has been found that the above-described object is achieved by a spunbonded nonwoven fabric comprising a core-sheath type composite fiber in which a core part contains a propylene-based resin, a sheath component contains an ethylene-based resin, and a specified propylene-based resin is added to a core component. The present invention has been accomplished on the basis of such finding.

Specifically, the present invention provides the following inventions.

1. A spunbonded nonwoven fabric comprising a core-sheath composite fiber having a core part composed of a core component containing a propylene-based resin (A) satisfying the following (a) to (e) and a sheath part composed of a sheath component containing an ethylene-based resin:

(a) [mmmm] = 20 to 60 mol%,
(b) $[mm] \times [rr]/[mr]^2 \leq 2.0$,
(c) weight average molecular weight (Mw) = 10,000 to 200,000,
(d) molecular weight distribution (Mw/Mn) < 4.0, and
(e) a melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is from 0 to 120°C,

wherein a content of the propylene-based resin (A) in the core component is 1 to 50% by mass,
wherein the core component further contains a propylene-based resin (B) in which a melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is higher than 120°C, wherein a content of the propylene-based resin (B) in the core component is 50 to 99% by mass,
wherein a content of the ethylene-based resin in the sheath component is 50 to 100% by mass,
wherein the ethylene-based resin is an ethylene homopolymer or a copolymer in which a copolymerization ratio of an ethylene unit is more than 50 mol%.

2. The spunbonded nonwoven fabric according to item 1, wherein the propylene-based resin (A) satisfies the following (f) and (g):

(f) rrrr/(1 - mmmm) ≤ 0.1, and
(g) [rmrm] > 2.5 mol%.

3. The spunbonded nonwoven fabric according to item 1 or 2, wherein a total content of the propylene-based resin (A) in the core-sheath composite fiber as calculated according to the following expression is 0.5 to 47.5% by mass:

$$[\text{Total content of propylene-based resin (A)}] = Wc \times Xc / 100$$

Wc: Mass fraction of the core part
Xc: Mass fraction of the propylene-based resin (A) in the core component constituting the core part.

4. The spunbonded nonwoven fabric according to any one of items 1 to 3, wherein the propylene-based resin (A) is a propylene homopolymer or a copolymer in which a copolymerization ratio of a propylene unit is 90 mol% or more.

5. The spunbonded nonwoven fabric according to any one of items 1 to 4, wherein the propylene-based resin (B) is a propylene homopolymer or a copolymer in which a copolymerization ratio of a propylene unit is 50 mol% or more.

6. A multilayered nonwoven fabric comprising a laminate of two or more layers of nonwoven fabric, at least one layer of the nonwoven fabric constituting an outer layer of the multilayered nonwoven fabric being composed of the spunbonded nonwoven fabric according to any one of items 1 to 5.

7. A fiber product comprising the spunbonded nonwoven fabric according to any one of items 1 to 5 or the multilayered nonwoven fabric according to item 6.

Advantageous Effects of Invention

According to the present invention, in the spunbonded nonwoven fabric composed of a core-sheath composite fiber, spinning stability of the fiber and flexibility of the nonwoven fabric can be improved.

Description of Embodiments

The spunbonded nonwoven fabric of the present invention comprises a core-sheath composite fiber having a core part composed of a core component containing a propylene-based resin (A) satisfying the following (a) to (e) and a sheath part composed of a sheath component containing an ethylene-based resin:

(a) [mmmm] = 20 to 60 mol%,
(b) [mm] $\times$ [rr]/[mr]$^2$ $\leq$ 2.0,
(c) weight average molecular weight (Mw) = 10,000 to 200,000,
(d) molecular weight distribution (Mw/Mn) < 4.0, and
(e) a melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is from 0 to 120°C,

wherein a content of the propylene-based resin (A) in the core component is 1 to 50% by mass,
wherein the core component further contains a propylene-based resin (B) in which a melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is higher than 120°C,
wherein a content of the propylene-based resin (B) in the core component is 50 to 99% by mass,
wherein a content of the ethylene-based resin in the sheath component is 50 to 100% by mass,
wherein the ethylene-based resin is an ethylene homopolymer or a copolymer in which a copolymerization ratio of an ethylene unit is more than 50 mol%.

[Propylene-based resin (A)]

The propylene·based resin (A) which is used in the present invention has properties shown in the following (a) to (e), and these properties can be regulated according to selection of a catalyst or reaction conditions on the occasion of producing the propylene-based resin (A).

(a) Mesopentad fraction [mmmm] = 20 to 60 mol%

If the mesopentad fraction [mmmm] is less than 20 mol%, spinnability becomes instable, and reducing the fiber diameter is difficultly achieved. In addition, if the mesopentad fraction [mmmm] is more than 60 mol%, flexibility of the nonwoven fabric is impaired. This mesopentad fraction [mmmm] is preferably 30 to 50 mol%, and more preferably 40 to 50 mol%.

(b) [mm] $\times$ [rr]/[mr]$^2$ $\leq$ 2.0

The [mm] $\times$ [rr]/[mr]$^2$ indicates an index of random properties of the polymer, and when the [mm] $\times$ [rr]/[mr]$^2$ is closer to 0.25, the random properties become higher, and the nonwoven fabric is excellent in flexibility. When this value is 2.0 or less, sufficient flexibility is obtained in fibers obtained by means of spinning.
From the viewpoint of obtaining sufficient flexibility as described above, the [mm] $\times$ [rr]/[mr]$^2$ is preferably 0.25 to 1.8, and more preferably 0.25 to 1.5.

(c) Weight average molecular weight (Mw) = 10,000 to 200,000

In the above-described propylene-based resin (A), when the weight average molecular weight is 10,000 or more, the viscosity of the propylene-based resin (A) is not excessively low but is appropriate, and therefore, end breakage on the occasion of spinning is suppressed. In addition, when the weight average molecular weight is 200,000 or less, the viscosity of the above-described propylene-based resin (A) is not excessively high, and spinnability is improved. This weight average molecular weight is preferably 30,000 to 150,000, and more preferably 50,000 to 150,000.

(d) Molecular weight distribution (Mw/Mn) < 4.0

In the above-described propylene-based resin (A), when the molecular weight distribution (Mw/Mn) is less than 4.0, the generation of stickiness in the fibers obtained by spinning is suppressed. This molecular weight distribution is preferably 3.0 or less.

(e) Melting point (Tm-D)

In the above-described propylene-based resin (A), the melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is 0 to 120°C, and preferably 40 to 120°C.
As the above-described propylene-based resin (A), a propylene-based resin further satisfying the following (f) and (g) is preferably used.

(f) rrrr/(1 - mmmm) ≤ 0.1

A value of rrrr/(1 - mmmm) is an index indicating the uniformity of regularity distribution of the propylene-based resin (A). In the above-described propylene-based resin (A), when the rrrr/(1 - mmmm) is more than 0.1, the regularity distribution is widened, and a mixture of atactic polypropylene is formed, thereby likely causing stickiness. From such a viewpoint, the rrrr/(1 - mmmm) is preferably 0.05 or less, and more preferably 0.04 or less.

(g) [rmrm] > 2.5 mol%

When a racemic-meso-racemic-meso pentad fraction [rmrm] of the above-described propylene-based resin (A) is 2.5 mol% or less, random properties of the propylene-based resin (A) are reduced, a degree of crystallization is increased, and flexibility of the nonwoven fabric is lowered. The [rmrm] is preferably 2.6 mol% or more, and more preferably 2.7 mol% or more. An upper limit thereof is usually about 10 mol%.
The stereoregularity of the foregoing (a), (b), (f) and (g) is determined by means of NMR.
In the present invention, the mesopentad fraction [mmmm], the racemic pentad fraction [rrrr], and the racemic-meso-racemic-meso pentad fraction [rmrm] are measured in conformity with the method proposed by A. Zambelli, et al., "Macromolecules, 6, 925 (1973)" and are a meso fraction, a racemic fraction, and a racemic-meso-racemic-meso fraction, respectively in the pentad units of the polypropylene molecular chain that are measured based on a signal of the methyl group in the $^{13}$C-NMR spectrum. As the mesopentad fraction [mmmm] increases, the stereoregularity increases, too. In addition, the triad fractions [mm], [rr], and [mr] were also calculated by the above-described method.
The $^{13}$C-NMR spectrum is measured with the following device under the following conditions according to the peak assignment proposed by A. Zambelli, et al., "Macromolecules, 8, 687 (1975)".
Device: $^{13}$C-NMR device, JNM-EX400 series, manufactured by JEOL, Ltd.
Method: Proton complete decoupling method
Concentration: 220 mg/mL
Solvent: Mixed solvent of 1,2,4-trichlorobenzene and deuterated benzene in a ratio of 90/10 (volume ratio)
Temperature: 130°C
Pulse width: 45°
Pulse repetition time: 4 seconds
Accumulation: 10,000 times

<Calculating expressions>

$$M = m/S \times 100$$

$$R = \gamma/S \times 100$$

$$S = P\beta\beta + P\alpha\beta + P\alpha\gamma$$

S: Signal intensity of carbon atoms in side chain methyl of all the propylene units
$P\beta\beta$: 19.8 to 22.5 ppm
$P\alpha\beta$: 18.0 to 17.5 ppm
$P\alpha\gamma$: 17.5 to 17.1 ppm
$\gamma$:Racemic pentad chain, 20.7 to 20.3 ppm
m: Mesopentad chain, 21.7 to 22.5 ppm

The above-described (c) weight average molecular weight (Mw) and (d) molecular weight distribution (Mw/Mn) are determined by means of a gel permeation chromatography (GPC) measurement. The weight average molecular weight of the present invention is a weight average molecular weight as converted into polystyrene, as measured by using the following device under the following conditions, and the molecular weight distribution is a value calculated from a number average molecular weight (Mn) as measured similarly and the above-described weight average molecular weight.

<GPC Measuring device>

Column: TOSO GMHHR-H(S)HT
Detector: RI detector for liquid chromatography, WATERS 150C

<Measurement conditions>

Solvent: 1,2,4-trichlorobezene
Measurement temperature: 145°C
Flow rate: 1.0 mL/min
Sample concentration: 2.2 mg/mL
Injection amount: 160 $\mu$L
Calibration curve: Universal Calibration
Analysis program: HT-GPC (ver. 1.0)

The propylene-based resin (A) may be either a propylene homopolymer or a copolymer. In the case where the propylene-based resin (A) is a copolymer, a copolymerization ratio of a propylene unit is 50 mol% or more, preferably 60 mol% or more, more preferably 70 mol% or more, still more preferably 90 mol% or more, and especially preferably 95 mol% or more. Examples of a copolymerizable monomer include $\alpha$-olefins having 2 or 4 to 20 carbon atoms, such as ethylene, 1-butene, 1-pentene, 1-hexene, 1-octene, 1-decene, etc., acrylic acid esters, such as methyl acrylate, etc., vinyl acetate, and the like. A propylene homopolymer is preferred from the viewpoint of moldability.

As for the propylene-based resin (A), its initial elastic modulus is preferably 5 MPa or more and less than 500 MPa, more preferably 10 to 400 MPa, and still more preferably 20 to 300 MPa. The initial elastic modulus as referred to in this description is one measured by the following measuring method.

[Measuring method of initial elastic modulus]

A press sheet having a thickness of 1 mm is fabricated. A test piece is sampled from the resulting press sheet in conformity with JIS K7113 (2002) No. 2-1/2. Using a tensile tester (AUTOGRAPH AG-1, manufactured by Shimadzu Corporation), the test piece is set at an initial length L0 of 40 mm, stretched at a tensile speed of 100 mm/min, and measured for a strain and a load in the stretching process, and the initial elastic modulus is calculated according to the following expression.

$$\text{Initial elastic modulus (N)} = (\text{Load (N) at a strain of 5\%})/0.05$$

The above-described propylene-based resin (A) can be produced by using a metallocene-based catalyst as described in, for example, WO2003/087172. In particular, a metallocene-based catalyst using a transition metal compound in which a ligand forms a crosslinked structure via a crosslinking group is preferred. Above all, a metallocene-based catalyst obtained by combining a transition metal compound in which a crosslinked structure is formed via two crosslinking group with a promoter is preferred.

Specifically, examples thereof include a polymerization catalyst containing (A) a transition metal compound represented by the general formula (I) and (B) a component selected from (B-1) a compound capable of reacting with the transition metal compound that is the component (A) or a derivative thereof to form an ionic complex and (B-2) an aluminoxane.

$$A^1 \underset{E^2}{\overset{E^1}{\diamondsuit}} A^2 \quad MX_qY_r \qquad \cdots \qquad (I)$$

[In the formula, M represents a metal element belonging to any one of the Groups 3 to 10 or the lanthanoid series in the periodic table; each of $E^1$ and $E^2$ represents a ligand selected from a substituted cyclopentadienyl group, an indenyl group, a substituted indenyl group, a heterocyclopentadienyl group, a substituted heterocyclopentadienyl group, an amide group, a phosphide group, a hydrocarbon group, and a silicon-containing group, and forms a crosslinked structure via $A^1$ and $A^2$, and may be the same as or different from each other; X represents a σ-bonding ligand, and when a plurality of Xs are present, the plurality of Xs may be the same as or different from each other, and each X may crosslink with any other X, $E^1$, $E^2$, or Y; Y represents a Lewis base, and when a plurality of Ys are present, the plurality of Ys may be the same as or different from each other, and each Y may crosslink with any other Y, $E^1$, $E^2$, or X; each of $A^1$ and $A^2$ represents a divalent crosslinking group that bonds two ligands and represents a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, -SO$_2$-, -Se-, -NR$^1$-, - PR$^1$-, -P(O)R$^1$-, -BR$^1$-, or -AlR$^1$-, wherein R$^1$ represents a hydrogen atom, a halogen atom, a hydrocarbon group having 1 to 20 carbon atoms, or a halogen-containing hydrocarbon group having 1 to 20 carbon atoms, and may be the same as or different from each other; q represents an integer of 1 to 5 and corresponds to [(valence of M) - 2]; and r represents an integer of 0 to 3.]

The transition metal compound that is the above-described component (A) is preferably a transition metal compound in which the ligand is of a (1,2')(2,1') double crosslinking type, and examples thereof include (1,2'-dimethylsilylene)(2,1'-dimethylsilylene)-bis(3-trimethylsilylmethylindenyl)zi rconium dichloride.

As specific examples of the compound that is the above-described component (B-1), there can be exemplified triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl (tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarsenate, sliver perchlorate, silver trifluoroaceate, silver trifluoromethanesulfonate, and the like.

Examples of the aluminoxane that is the above-described component (B-2) include known chain aluminoxanes and cyclic aluminoxanes.

In addition, the propylene-based resin (A) may also be produced by jointly using an organoaluminum compound, such as trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, etc.

A content of the above-described propylene-based resin (A) in the core component is 1 to 50% by mass, preferably 3 to 50% by mass, more preferably 5 to 50% by mass, especially preferably 5 to 40% by mass, and most preferably 5 to 30% by mass. When the content of the propylene-based resin (A) is 50% by mass or less, the degree of crystallization on the spinning line does not become extremely slow, and the spinnability becomes stable. When the content of the propylene-based resin (A) in the core component is 1% by mass or more, it becomes possible to achieve the reduction of diameter of fibers, and the flexibility of the nonwoven fabric is improved with a decrease of the elastic modulus of fiber.

The above-described core component further contains a propylene-based resin (B) as described below.

[Propylene-based resin (B)]

The propylene-based resin (B) which is used in the present invention is not particularly limited so long as its melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is higher than 120°C, and PP3155 (a trade name, manufactured by ExxonMobil Chemical), Y2000GP (a trade name, manufactured by Prime Polymer Co., Ltd.), and the like can be used.

The propylene-based resin (B) may be either a propylene homopolymer or a copolymer. In the case where the propylene-based resin (B) is a copolymer, a copolymerization ratio of a propylene unit is 50 mol% or more, preferably 60 mol% or more, more preferably 70 mol% or more, still more preferably 90 mol% or more, and especially preferably 95 mol% or more. Examples of a copolymerizable monomer include α-olefins having 2 or 4 to 20 carbon atoms, such as ethylene, 1-butene, 1-pentene, 1-hexene, 1-octene, 1-decene, etc., acrylic acid esters, such as methyl acrylate, etc., vinyl acetate, and the like. A propylene homopolymer is preferred from the viewpoint of moldability.

In addition, as for the propylene-based resin (B), its melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is preferably higher than 120°C and 170°C or lower, and more preferably 125 to 167°C.

As for the propylene-based resin (B), its initial elastic modulus is preferably 500 to 2,000 MPa, more preferably 600 to 2,000 MPa, and still more preferably 700 to 1,800 MPa.

A content of the above-described propylene-based resin (B) in the core component is 50 to 99% by mass, preferably 50 to 97% by mass, more preferably 50 to 95% by mass, especially preferably 60 to 95% by mass, and most preferably 70 to 90% by mass.

[Ethylene-based resin]

The ethylene-based resin which is contained in the sheath component that forms the sheath part of the core-sheath composite fiber is either a homopolymer or a copolymer. In the case where the ethylene-based resin is a copolymer, a copolymerization ratio of an ethylene unit is more than 50 mol%, preferably 60 mol% or more, more preferably 70 mol% or more, still more preferably 90 mol% or more, and especially preferably 95 mol% or more. Examples of a copolymerizable monomer include α-olefins having 3 to 20 carbon atoms, such as propylene, 1-butene, 1-pentene, 1-hexene, 1-octene, 1-decene, etc., acrylic acid esters, such as methyl acrylate, etc., vinyl acetate, and the like.

A melting point of the ethylene-based resin is preferably 50 to 155°C, and more preferably 60 to 150°C.

A content of the ethylene-based resin in the sheath component is 50 to 100% by mass, preferably 85 to 100% by mass, and more preferably 90 to 100% by mass.

In addition, the sheath component can also be compounded with a conventionally known additive in addition to the above-described ethylene-based resin. Examples of the additive include a foaming agent, a crystal nucleating agent, a weatherability stabilizer, a UV absorber, a light stabilizer, a heat resistance stabilizer, an antistatic agent, a release agent, a flame retardant, a synthetic oil, a wax, an electric property-improving agent, a slip inhibitor, an anti-blocking agent, a viscosity-controlling agent, a coloring inhibitor, a defogging agent, a lubricant, a pigment, a dye, a plasticizer, a softening agent, an age resistor, a hydrochloric acid-absorbing agent, a chlorine scavenger, an antioxidant, an antitack agent, and the like.

The sheath component may further contain an internal release agent. The internal release agent as referred to herein means an additive for improving release properties of the nonwoven fabric upon being added to the resin raw material. Specifically, examples thereof include high-melting point polymers, organic carboxylic acids or metal salts thereof, aromatic sulfonic acids or metal salts thereof, organic phosphoric acid compounds or metal salts thereof, dibenzylidene sorbitol or derivatives thereof, rhodinic acid partial metal salts, inorganic fine particles, imides, amides, quinacridones, quinones, and mixtures thereof, and the like.

Examples of the high-melting point polymer include polyolefins, such as polyethylene, polypropylene, etc., and the like.

Examples of the organic carboxylic acid include fatty acids, such as octylic acid, palmitic acid, lauric acid, stearic acid, behenic acid, montanic acid, 12-hydroxystearic acid, oleic acid, isostearic acid, ricinoleic acid, etc., and aromatic acids, such as benzoic acid, p-t-butyl-benzoic acid, etc. Examples of the metal salt of an organic carboxylic acid include salts of Li, Ca, Ba, Zu, Mg, Al, Pb, and the like of the above-described organic carboxylic acids, and metallic soaps that are a metal salt of a carboxylic acid. Specifically, examples thereof include aluminum benzoate, aluminum p-t-butylbenzoate, sodium adipate, sodium thiophenecarboxylate, sodium pyrrolecarboxylate, and the like.

Examples of the aromatic sulfonic acid include a linear alkylbenzenesulfonic acid, a branched alkylbenzenesulfonic acid, naphthalenesulfonic acid, dodecylbenzenesulfonic acid, and the like. Examples of the metal salt of an aromatic sulfonic acid include salts of Li, Ca, Ba, Zu, Mg, Al, Pb, and the like of the above-described aromatic sulfonic acids.

Examples of the organic phosphoric acid compound include trimethyl phosphate, triethyl phosphate, tributyl phosphate, 2-ethylhexyl phosphate, butoxyethyl phosphate, triphenyl phosphate, tricresyl phosphate, trixylenyl phosphate, cresyldiphenyl phosphate, 2-ethylhexyldiphenyl phosphate, cresyldi-2,6-xylenyl phosphate, resorcinoldiphenol phosphate, various aromatic condensed phosphate esters, 2-chloroethyl phosphate, chloropropyl phosphate, dichloropropyl phosphate, tribromoneopentyl phosphate, a halogen-containing condensed phosphoric acid, bis-2-ethylhexyl phosphate, diisodecyl phosphate, 2-methacryloyloxyethyl acid phosphate, diphenyl-2-methacryloyloxyethyl phosphate, methyl acid phosphate, butyl acid phosphate, monoisodecyl phosphate, 2-butylhexyl acid phosphate, isodecyl acid phosphate, triphenyl phosphate, dibutyl hydrogen phosphate, dibutyl hydrogen phosphate, polyoxyethylene lauryl ether phosphoric acid, polyoxyalkyl ether phosphoric acid, polyoxyethylene alkyl phenyl ether phosphoric acid, polyoxyethylene dialkyl phenyl ether phosphoric acid, and the like; and examples of the metal salt of an organic phosphoric acid compound include metal salts of Li, Ca, Ba, Zu, Mg, Al, Pb, and the like of the above-described organic phosphoric acid compounds. Examples of commercially available products thereof include ADEKA STAB NA-11 and ADEKA STAB NA-21, all of which are manufactured by ADEKA Corporation, and the like.

Examples of dibenzylidene sorbitol or its derivative include dibenzylidene sorbitol, 1,3:2,4-bis(o-3,4-dimethylbenzylidene) sorbitol, 1,3:2,4-bis(o-2,4-dimethylbenzylidene)sorbitol, 1,3:2,4-bis(o-4-ethylbenzylidene)sorbitol, 1,3:2,4-bis(o-4-chlorobenzylidene)sorbitol, 1,3:2,4-dibenzylidene sorbitol, and the like. Examples of commercially available products thereof include GEL ALL MD and GEL ALL MD-R, all of which are manufactured by New Japan Chemical Co., Ltd., and the like.

Examples of the rhodinic acid partial metal salt include PINECRYSTAL KM1600, PINECRYSTAL KM1500, and PINECRYSTAL KM1300, all of which are manufactured by Arakawa Chemical Industries, Ltd., and the like.

Examples of the inorganic fine particle include talc, clay, mica, asbestos, glass fiber, glass flake, glass bead, calcium silicate, montmorillonite, bentonite, graphite, aluminum powder, alumina, silica, diatomaceous earth, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite, molybdenum sulfide, and the like. Examples of commercially available products thereof include SYLYSIA, manufactured by Fuji Silysia Chemical Ltd., MIZUKASIL, manufactured by Mizusawa Industrial Chemicals, Ltd., and the like.

These internal release agents can be used solely or in combination of two or more kinds thereof. In the present invention, among these internal release agents, dibenzylidene sorbitol, 1,3:2,4-bis(o-3,4-dimethylbenzylidene)sorbitol, 1,3:2,4-bis(o-2,4-dimethylbenzylidene)sorbitol, 1,3:2,4-bis(o-4-ethylbenzylidene)sorbitol, 1,3:2,4-bis(o-4-chlorobenzylidene)sorbitol, and 1,3:2,4-dibenzylidene sorbitol are preferred.

A content of the internal release agent is preferably 10 to 10,000 ppm by mass, and more preferably 100 to 5,000 ppm by mass on the basis of the composition of the sheath component. When the content of the internal release agent is 10 ppm by mass or more, the function as the release agent is revealed, whereas when it is 10,000 ppm by mass or less, a balance between the function as the release agent and the economy becomes favorable.

In the core-sheath type composite fiber, a total content of the above-described propylene-based resin (A) as calculated according to the following expression is preferably 0.5 to 47.5% by mass from the viewpoints of stabilizing the spinnability of fiber and giving flexibility to the nonwoven fabric.

$$[\text{Total content of propylene-based resin (A)}] = Wc \times Xc \, / \, 100$$

Wc: Mass fraction of the core part

Xc: Mass fraction of the propylene-based resin (A) in the core component constituting the core part

In the core-sheath type composition fiber, the mass fraction of the core part is preferably in the range of 50 to 90% by mass from the viewpoints of stability control of the core-sheath structure of fiber and stabilization of spinnability.

As for the core-sheath composite fiber constituting the spunbonded nonwoven fabric of the present invention, a fineness as calculated by the following measuring method is preferably 0.5 deniers or more and less than 1.5 deniers, and more preferably 0.8 to 1.45 deniers from the viewpoints of a balance among texture of the nonwoven fabric, flexibility and strength. As described above, the spunbonded nonwoven fabric of the present invention is small in terms of the fineness and is excellent in terms of spinning stability even under molding conditions under which end breakage likely occurs.

[Measurement of fineness]

Fibers in a nonwoven fabric are observed with a polarizing microscope, an average value (d) of diameter of randomly selected five fibers is measured, and the fineness of the nonwoven fabric sample is calculated from a density of the resin (p = 900,000 g/m$^3$) according to the following expression [1].

$$\text{Fineness (denier)} = \rho \times \pi \times (d/2)^2 \times 9{,}000 \qquad [1]$$

[Multilayered nonwoven fabric]

The spunbonded nonwoven fabric of the present invention may also be a multilayered nonwoven fabric comprising a laminate of two or more layers. In that case, from the viewpoint of smoothness of the surface, it is preferred that at least one layer of the nonwoven fabric constituting an outer layer of the multilayered nonwoven fabric is the spunbonded nonwoven fabric composed of the core-sheath composite fiber of the present invention.

[Fiber product]

Although the fiber product using the spunbonded nonwoven fabric of the present invention is not particularly limited, the following fiber products can be exemplified. That is, there can be exemplified a member for a disposable diaper, a stretchable member for a diaper cover, a stretchable member for a sanitary product, a stretchable member for a hygienic product, a stretchable tape, an adhesive bandage, a stretchable member for clothing, an insulating material for clothing, a heat insulating material for clothing, a protective suit, a hat, a mask, a glove, a supporter, a stretchable bandage, a base fabric for a fomentation, a non-slip base fabric, a vibration absorber, a finger cot, an air filter for a clean room, an electret filter subjected to electret processing, a separator, a heat insulator, a coffee bag, a food packaging material, a ceiling skin material for an automobile, an acoustic insulating material, a cushioning material, a speaker dust-proof material, an air cleaner material, an insulator skin, a backing material, an adhesive non-woven fabric sheet, various members for automobiles such as a door trim, various cleaning materials such as a cleaning material for a copying machine, the facing and backing of a carpet, an agricultural beaming, a timber drain, members for shoes such as a sport shoe skin, a member for a bag, an industrial sealing material, a wiping material, a sheet, and the like.

Examples

The present invention is hereunder explained in more detail by reference to Examples, but it should be construed that the present invention is not limited to these Examples at all.

Example 1

(Preparation of core component)

80% by mass of a propylene-based resin (B) (PP3155, manufactured by ExxonMobil Chemical) having a melt flow rate (MFR), as measured under conditions at a temperature of 230°C and a load of 2.16 kg in conformity with ASTM D1238, of 36 g /10 min was compounded with 20% by mass of a propylene-based resin (A) (L-MODU (a registered trademark) S901, manufactured by Idemitsu Kosan Co., Ltd.) having a melt flow rate (MFR), as measured under conditions at a temperature of 230°C and a load of 2.16 kg in conformity with JIS K7210, of 50 g/10 min and a melting point of 70°C, thereby preparing a core component.

(Preparation of sheath component)

Only an ethylene-based resin (ASPUN 6834, manufactured by The Dow Chemical Company) having a melt flow rate (MFR), as measured under conditions at a temperature of 190°C and a load of 2.16 kg in conformity with ISO 1133, of 17 g/10 min and a melting point of 130°C was used, thereby preparing a sheath component.

(Production of spunbonded nonwoven fabric)

A nonwoven fabric was molded by using a spunbond machine (REICOFIL 4, manufactured by Reicofil GmbH). The raw materials of the sheath component and the core component were spun in such a manner that the materials were each separately melt extruded with a single-screw extruder at a resin temperature of 240°C and discharged through a core-sheath composite nozzle having a nozzle diameter of 0.6 mm (number of holes: 6,800 holes/m) at a rate of 0.5 g/min per single hole in a mass ratio of the core component to the sheath component of 70/30.
The fibers obtained by spinning were laminated at a temperature of 16°C and a cabin pressure of 7,000 Pa on a net surface moving at a line speed of 230 m/min. A fiber bundle thus laminated on the net surface was embossed with an embossing roll heated at 145°C at a line pressure of 70 N/mm and then wound up around a winding roll.
The resulting nonwoven fabric was measured and evaluated as follows. The results are shown in Tables 1 and 2.

[Measurement of basis weight]

A weight of the resulting nonwoven fabric of 5 cm × 5 cm was measured, thereby measuring a basis weight (g/10 m$^2$).

[Measurement of fineness]

Fibers in the nonwoven fabric were observed with a polarizing microscope, an average value (d) of diameter of randomly selected five fibers was measured, and the fineness of the nonwoven fabric sample was calculated from a density of the resin ($\rho$ = 900,000 g/m$^3$) according to the following expression [1].

$$\text{Fineness (denier)} = \rho \times \pi \times (d/2)^2 \times 9,000 \qquad [1]$$

[Evaluation of spinning stability]

As an index of the spinning stability in molding of the nonwoven fabric, a maximum cabin pressure at which no end breakage occurred was shown.

[Evaluation of breaking strength and breaking strain]

A test piece having a length of 200 mm and a width of 50 mm was sampled from the resulting nonwoven fabric in each of the machine direction (MD) and the cross direction (CD) to the machine direction. Using a tensile tester (AUTOGRAPH AG-1, manufactured by Shimadzu Corporation), the test piece was set at an initial length L0 of 100 mm, stretched at a tensile speed of 300 mm/min, and measured for a strain and a load in the stretching process. Values of the load and the strain at the moment at which the nonwoven fabric was broken were defined as a breaking strength and a breaking strain, respectively.

[Handle-O-Meter test]

A test piece of 200 mm × 200 mm is set on a slit having a width of 1/4 inches in such a manner that it is rectangular to the slit, and a position of 67 mm (1/3 of the width of the test piece) far from the side of the test piece is pushed in a depth of 8 mm by using a blade of a penetrator. A resistance value at this time was measured to evaluate a degree of flexibility of the test piece. As for a characteristic feature of this measurement method, a force in which a frictional force generated when the test piece slightly slips on the test bench is mixed with a resisting force (degree of flexibility) at the time of pushing is measured. It is meant that the smaller the resistance value obtained by the measurement, the more favorable the flexibility of the nonwoven fabric is.

Example 2

A nonwoven fabric was molded in the same manner as that in Example 1, except that in Example 1, a material obtained by mixing 50% by mass of the propylene-based resin (B) and 50% by mass of the propylene-based resin (A) was used as the core component, and the cabin pressure was changed to 7,500 Pa, and then evaluated in the same way. The results are shown in Tables 1 and 2.

Comparative Example 1

A nonwoven fabric was molded in the same manner as that in Example 1, except that in Example 1, 100% by mass of the propylene-based resin (B) was used as the core component, the cabin pressure was changed to 4,000 Pa, and the embossing roll temperature was changed to 150°C, and then evaluated in the same way. The results are shown in Tables 1 and 2.

Comparative Example 2

A nonwoven fabric was molded in the same manner as that in Comparative Example 1, except that in Comparative Example 1, the cabin pressure was changed to 5,000 Pa. However, end breakage occurred frequently, so that molding could not be achieved.

Example 3

A nonwoven fabric was molded in the same manner as that in Example 1, except that in Example 1, the core component and the sheath component were discharged in a mass ratio of 50/50 and spun, and the cabin pressure was changed to 6,000 Pa, and then evaluated in the same way. The results are shown in Tables 1 and 2.

Example 4

A nonwoven fabric was molded in the same manner as that in Example 1, except that in Example 1, a material obtained by mixing 50% by mass of the propylene-based resin (B) and 50% by mass of the propylene-based resin (A) was used as the core component, the core component and the sheath component were discharged in a mass ratio of 50/50 and spun, and the cabin pressure was changed to 6,500 Pa, and then evaluated in the same way. The results are shown in Tables 1 and 2.

Comparative Example 3

A nonwoven fabric was molded in the same manner as that in Example 1, except that in Example 1, 100% by mass of the propylene-based resin (B) was used as the core component, the core component and the sheath component were discharged in a mass ratio of 50/50 and spun, the cabin pressure was changed to 4,200 Pa, and the embossing roll temperature was changed to 156°C, and then evaluated in the same way. The results are shown in Tables 1 and 2.

Comparative Example 4

A nonwoven fabric was molded in the same manner as that in Comparative Example 3, except that in Comparative Example 3, the cabin pressure was changed to 5,000 Pa. However, end breakage occurred frequently, so that molding could not be achieved.

[Table 1]

| | Core component | | Sheath component | Molding conditions | | | | | | | | | |
|---|---|---|---|---|---|---|---|---|---|---|---|---|
| | Propylene-based resin (A) | Propylene-based resin (B) | Ethylene-based resin | Resin temperature | Discharge amount per single hole | Core/sheath mass ratio | Total content of propylene-based resin (A) | Cabin pressure | Embossing temperature | Line pressure | Line speed | Basis weight |
| | % by mass | % by mass | % by mass | °C | g/min | | % | Pa | °C | N/mm | m/min | gsm |
| Example 1 | 20 | 80 | 100 | 240 | 0.5 | 70/30 | 14 | 7000 | 145 | 70 | 230 | 15 |
| Example 2 | 50 | 50 | 100 | 240 | 0.5 | 70/30 | 35 | 7500 | 145 | 70 | 230 | 15 |
| Comparative Example 1 | 0 | 100 | 100 | 240 | 0.5 | 70/30 | 0 | 4000 | 150 | 70 | 230 | 15 |
| Comparative Example 2 | 0 | 100 | 100 | 240 | 0.5 | 70/30 | 0 | 5000 | 150 | 70 | 230 | - |
| Example 3 | 20 | 80 | 100 | 240 | 0.5 | 50/50 | 10 | 6000 | 145 | 70 | 230 | 15 |
| Example 4 | 50 | 50 | 100 | 240 | 0.5 | 50/50 | 25 | 6500 | 145 | 70 | 230 | 15 |
| Comparative Example 3 | 0 | 100 | 100 | 240 | 0.5 | 50/50 | 0 | 4200 | 156 | 70 | 230 | 15 |
| Comparative Example 4 | 0 | 100 | 100 | 240 | 0.5 | 50/50 | 0 | 5000 | 156 | 70 | 230 | - |

[Table 2]

| | Fiber diameter | Breaking strength | | Breaking strain | | Handle-O-Meter | |
|---|---|---|---|---|---|---|---|
| | | MD | CD | MD | CD | MD | CD |
| | Denier | N/5 cm | N/5 cm | % | % | mN | mN |
| Example 1 | 1.24 | 37 | 18 | 116 | 122 | 61 | 34 |
| Example 2 | 1.31 | 31 | 15 | 83 | 109 | 48 | 26 |
| Comparative Example 1 | 1.50 | 29 | 16 | 79 | 89 | 76 | 43 |
| Comparative Example 2 | - | - | - | - | - | - | - |
| Example 3 | 1.33 | 29 | 17 | 98 | 118 | 50 | 30 |
| Example 4 | 1.40 | 29 | 12 | 88 | 101 | 48 | 25 |
| Comparative Example 3 | 1.54 | 26 | 17 | 92 | 100 | 63 | 38 |
| Comparative Example 4 | - | - | - | - | - | - | - |

Industrial Applicability

The nonwoven fabric of the present invention is suitably used for a variety of fiber products, for example, a disposable diaper, a sanitary product, a hygienic product, a clothing material, a bandage, a packaging material, etc.

**Claims**

1.  A spunbonded nonwoven fabric comprising a core-sheath composite fiber having a core part composed of a core component containing a propylene-based resin (A) satisfying the following (a) to (e) and a sheath part composed of a sheath component containing an ethylene-based resin:

    (a) [mmmm] = 20 to 60 mol%,
    (b) [mm] $\times$ [rr]/[mr]$^2 \leq$ 2.0,
    (c) weight average molecular weight (Mw) = 10,000 to 200,000,
    (d) molecular weight distribution (Mw/Mn) < 4.0, and
    (e) a melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is from 0 to 120°C,

    wherein a content of the propylene-based resin (A) in the core component is 1 to 50% by mass,
    wherein the core component further contains a propylene-based resin (B) in which a melting point (Tm-D), as defined as a peak top of a peak observed on the highest temperature side of a melting endothermic curve which is obtained by holding under a nitrogen atmosphere at -10°C for 5 minutes and then increasing the temperature at a rate of 10°C/min with a differential scanning calorimeter (DSC), is higher than 120°C, wherein a content of the propylene-based resin (B) in the core component is 50 to 99% by mass,
    wherein a content of the ethylene-based resin in the sheath component is 50 to 100% by mass,
    wherein the ethylene-based resin is an ethylene homopolymer or a copolymer in which a copolymerization ratio of an ethylene unit is more than 50 mol%.

2.  The spunbonded nonwoven fabric according to claim 1, wherein the propylene-based resin (A) satisfies the following (f) and (g):

    (f) rrrr/(1 - mmmm) $\leq$ 0.1, and
    (g) [rmrm] > 2.5 mol%.

3. The spunbonded nonwoven fabric according to claim 1 or 2, wherein a total content of the propylene-based resin (A) in the core-sheath composite fiber as calculated according to the following expression is 0.5 to 47.5% by mass:

$$[\text{Total content of propylene-based resin (A)}] = \text{Wc} \times \text{Xc} / 100$$

Wc: Mass fraction of the core part
Xc: Mass fraction of the propylene-based resin (A) in the core component constituting the core part.

4. The spunbonded nonwoven fabric according to any one of claims 1 to 3, wherein the propylene-based resin (A) is a propylene homopolymer or a copolymer in which a copolymerization ratio of a propylene unit is 90 mol% or more.

5. The spunbonded nonwoven fabric according to any one of claims 1 to 4, wherein the propylene-based resin (B) is a propylene homopolymer or a copolymer in which a copolymerization ratio of a propylene unit is 50 mol% or more.

6. A multilayered nonwoven fabric comprising a laminate of two or more layers of nonwoven fabric, at least one layer of the nonwoven fabric constituting an outer layer of the multilayered nonwoven fabric being composed of the spunbonded nonwoven fabric according to any one of claims 1 to 5.

7. A fiber product comprising the spunbonded nonwoven fabric according to any one of claims 1 to 5 or the multilayered nonwoven fabric according to claim 6.

**Patentansprüche**

1. Ein spinngebundener Vliesstoff, umfassend eine Kern-Mantel-Verbundfaser mit einem Kernteil, zusammengesetzt aus einer Kernkomponente, enthaltend ein Harz auf Propylenbasis (A), das die folgenden (a) bis (e) erfüllt, und einen Mantelteil, zusammengesetzt aus einer Mantelkomponente, die ein Harz auf Ethylenbasis enthält:

(a) [mmmm] = 20 bis 60 Mol-%,
(b) [mm] $\times$ [rr]/[mr]$^2$ ≤ 2,0,
(c) Zahlenmittel des Molekulargewichts (Mw) = 10.000 bis 200.000,
(d) Molekulargewichtsverteilung (Mw/Mn) < 4,0, und
(e) ein Schmelzpunkt (Tm-D), definiert als eine Peakspitze eines Peaks, der an der Seite mit der höchsten Temperatur einer endothermen Schmelzkurve beobachtet wird, welche durch Halten unter einer Stickstoffatmosphäre bei -10°C für 5 Minuten und dann Erhöhen der Temperatur mit einer Geschwindigkeit von 10°C/Min. mit einem Differentialscanningkalorimeter (DSC) erhalten wird, beträgt 0 bis 120°C,

wobei ein Gehalt des Harzes auf Propylenbasis (A) in der Kernkomponente 1 bis 50 Massen-% beträgt,
wobei die Kernkomponente ferner ein Harz auf Propylenbasis (B) enthält, in dem ein Schmelzpunkt (Tm-D), definiert als eine Peakspitze eines Peaks, der an der Seite mit der höchsten Temperatur einer endothermen Schmelzkurve beobachtet wird, welche durch Halten unter einer Stickstoffatmosphäre bei -10°C für 5 Minuten und dann Erhöhen der Temperatur mit einer Geschwindigkeit von 10°C/Min. mit einem Differentialscanningkalorimeter (DSC) erhalten wird, mehr als 120°C beträgt, wobei ein Gehalt des Harzes auf Propylenbasis (B) in der Kernkomponente 50 bis 99 Massen-% beträgt,
wobei ein Gehalt des Harzes auf Ethylenbasis in der Mantelkomponente 50 bis 100 Massen-% beträgt,
wobei das Harz auf Ethylenbasis ein Ethylenhomopolymer oder ein Copolymer ist, in dem ein Copolymerisationsverhältnis einer Ethyleneinheit mehr als 50 Mol-% beträgt.

2. Der spinngebundene Vliesstoff nach Anspruch 1, wobei das Harz auf Propylenbasis (A) die folgenden (f) und (g) erfüllt:

(f) rrrr/(1 - mmmm) ≤ 0,1, und
(g) [rmrm] > 2,5 Mol-%.

3. Der spinngebundene Vliesstoff nach Anspruch 1 oder 2, wobei ein Gesamtgehalt des Harzes auf Propylenbasis (A) in der Kern-Mantel-Verbundfaser, gemäß dem folgenden Ausdruck berechnet, 0,5 bis 47,5 Massen-% beträgt:

$$[\text{Gesamtgehalt des Harzes auf Propylenbasis (A)}] = Wc \times Xc / 100$$

Wc: Massenanteil des Kernteils

Xc: Massenanteil des Harzes auf Propylenbasis (A) in der den Kernteil bildenden Kernkomponente.

**4.** Der spinngebundene Vliesstoff nach einem der Ansprüche 1 bis 3, wobei das Harz auf Propylenbasis (A) ein Propylenhomopolymer oder ein Copolymer ist, in dem ein Copolymerisationsverhältnis einer Propyleneinheit 90 Mol-% oder mehr beträgt.

**5.** Der spinngebundene Vliesstoff nach einem der Ansprüche 1 bis 4, wobei das Harz auf Propylenbasis (B) ein Propylenhomopolymer oder ein Copolymer ist, in dem ein Copolymerisationsverhältnis einer Propyleneinheit 50 Mol-% oder mehr beträgt.

**6.** Ein mehrschichtiger Vliesstoff, umfassend ein Laminat aus zwei oder mehr Vliesstoffschichten, wobei mindestens eine Schicht des Vliesstoffes, die eine äußere Schicht des mehrschichtigen Vliesstoffes bildet, aus dem spinngebundenen Vliesstoff nach einem der Ansprüche 1 bis 5 zusammengesetzt ist.

**7.** Ein Faserprodukt, umfassend den spinngebundenen Vliesstoff nach einem der Ansprüche 1 bis 5 oder den mehrschichtigen Vliesstoff nach Anspruch 6.

**Revendications**

**1.** Tissu non tissé filé lié comprenant une fibre composite âme-gaine ayant une partie d'âme composée d'un composant d'âme contenant une résine à base de propylène (A) satisfaisant à (a) à (e) suivants et une partie de gaine composée d'un composant de gaine contenant une résine à base d'éthylène :

(a) [mmmm] = 20 à 60 % en moles,
(b) [mm] $\times$ [rr] / [mr]$^2$ $\leq$ 2,0,
(c) masse moléculaire moyenne en masse (Mw) = 10 000 à 200 000,
(d) distribution des masses moléculaires (Mw/Mn) < 4,0, et
(e) un point de fusion (Tm-D), déterminé par le sommet d'un pic observé du côté des températures maximales d'une courbe endothermique de fusion qui est obtenue par maintien dans une atmosphère d'azote à -10 °C pendant 5 minutes et ensuite élévation de la température à une vitesse de 10 °C/min au moyen d'un calorimètre à balayage différentiel (DSC), qui est de 0 à 120 °C,

dans lequel la teneur en la résine à base de propylène (A) du composant d'âme est de 1 à 50 % en masse, dans lequel le composant d'âme contient en outre une résine à base de propylène (B) dans lequel le point de fusion (Tm-D), déterminé par le sommet d'un pic observé du côté des températures maximales d'une courbe endothermique de fusion qui est obtenue par maintien dans une atmosphère d'azote à -10 °C pendant 5 minutes et ensuite élévation de la température à une vitesse de 10 °C/min au moyen d'un calorimètre à balayage différentiel (DSC), est supérieur à 120 °C, dans lequel la teneur en la résine à base de propylène (B) du composant d'âme est de 50 à 99 % en masse, dans lequel la teneur en la résine à base d'éthylène du composant de gaine est de 50 à 100 % en masse, dans lequel la résine à base d'éthylène est un homopolymère d'éthylène ou un copolymère dans lequel le taux de copolymérisation du motif éthylène est supérieur à 50 % en moles.

**2.** Tissu non tissé filé lié selon la revendication 1, dans lequel la résine à base de propylène (A) satisfait à (f) et (g) suivants :

(f) rrrr / (1 - mmmm) $\leq$ 0,1, et
(g) [rmrm] > 2,5 % en moles.

**3.** Tissu non tissé filé lié selon la revendication 1 ou 2, dans lequel la teneur totale en la résine à base de propylène (A) de la fibre composite âme-gaine, telle que calculée conformément à l'expression suivante, est de 0,5 à 47,5 % en masse :

$$[\text{Teneur totale en la résine à base de propylène (A)}] = Wc \times Xc \ / \ 100$$

Wc : fraction massique de la partie d'âme

Xc : fraction massique de la résine à base de propylène (A) dans le composant d'âme constituant la partie d'âme.

**4.** Tissu non tissé filé lié selon l'une quelconque des revendications 1 à 3, dans lequel la résine à base de propylène (A) est un homopolymère de propylène ou un copolymère dans lequel le taux de copolymérisation du motif propylène est de 90 % en moles ou plus.

**5.** Tissu non tissé filé lié selon l'une quelconque des revendications 1 à 4, dans lequel la résine à base de propylène (B) est un homopolymère de propylène ou un copolymère dans lequel le taux de copolymérisation du motif propylène est de 50 % en moles ou plus.

**6.** Tissu non tissé multicouche comprenant un stratifié de deux ou plusieurs couches de tissu non tissé, au moins une couche de tissu non tissé constituant une couche extérieure de tissu non tissé multicouche étant composée du tissu non tissé filée lié selon l'une quelconque des revendications 1 à 5.

**7.** Produit fibreux comprenant le tissu non tissé filé lié selon l'une quelconque des revendications 1 à 5 ou le tissu non tissé multicouche selon la revendication 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009209506 A
- EP 2543759 A1
- EP 2314741 A1
- WO 2003087172 A

**Non-patent literature cited in the description**

- **A. ZAMBELLI et al.** *Macromolecules,* 1975, vol. 8, 687